# FASCICULE DE BREVET EUROPEEN

(11) **EP 1 327 152 B1**
(45) Date de publication et mention de la délivrance du brevet: **18.02.2009**
(21) Numéro de dépôt: 01973940.8
(22) Date de dépôt: 12.10.2001
(51) Int. Cl.: G01N 35/10

(54) **DISPOSITIF DISPENSATEUR DE FLUIDE**
VORRICHTUNG ZUR ABGABE VON FLÜSSIGKEIT
FLUID DISPENSING DEVICE

(30) Priorité: 20.10.2000 EP 00810970
(43) Date de publication de la demande: 16.07.2003
(73) Titulaire: Seyonic SA, 2000 Neuchâtel (CH)
(72) Inventeur: BOILLAT, Marc, CH-2012 Neuchâtel (CH); VAN DER SCHOOT, Bart, CH-2000 Neuchâtel (CH); DROZ, Bastien, CH-2016 Cortaillod (CH); TINGUELY, Xavier, CH-2046 Fontaines (CH)
(74) Mandataire: GLN
(86) Numéro de dépôt international: PCT/CH2001/000614
(87) Numéro de publication internationale: WO 2002/033423

(56) Documents cités:
- EP-A- 0 505 004
- EP-A- 0 747 689
- EP-A- 0 865 824
- WO-A-98/45205
- WO-A-99/20395
- US-A- 5 916 524
- US-A- 5 927 547
- BOILLAT M A ET AL: "A DIFFERENTIAL PRESSURE LIQUID FLOW SENSOR FOR FLOW REGULATION AND DOSING SYSTEMS" PROCEEDINGS OF THE WORKSHOP ON MICRO ELECTRICAL MECHANICAL SYSTEMS. (MEMS),US,NEW YORK, IEEE, vol. WORKSHOP 8, 29 janvier 1995 (1995-01-29), pages 350-352, XP000555295 ISBN: 0-7803-2504-4 cité dans la demande

## Description

La présente invention se rapporte aux dispositifs dispensateurs de fluide. Elle concerne, plus particulièrement, un dispositif destiné à délivrer de très faibles volumes, typiquement, de 0,001 à quelques µl, avec une grande précision.

Un tel dispositif est décrit dans le brevet US 5,916,524. Il comprend une aiguille permettant de dispenser un fluide dans une cible et reliée à un ensemble comportant:
- une seringue formant logement et munie d'un piston actionné par un moteur pas à pas,
- un tube reliant la seringue à l'aiguille, et
- un ensemble de vannes associé au tube et permettant, dans un premier temps, de remplir la seringue à partir d'un récipient puis, dans un second temps, de commander l'écoulement du fluide au travers du tube, vers l'aiguille, la quantité dispensée étant définie par le nombre de pas effectués par le moteur pas à pas.

Dans la plupart des applications, le fluide à dispenser doit être très pur. Il est, en conséquence, coûteux et délicat à manipuler. De plus, les quantités nécessaires peuvent être extrêmement faibles. Or, avec le dispositif décrit ci-dessus le liquide passe du récipient dans la seringue, puis de celle-ci dans l'aiguille, au travers du tube et des vannes. Le volume ainsi mis en jeu et le risque de pollution sont grands. Par ailleurs, il est difficile de maîtriser la quantité dispensée. En effet, le volume de fluide compris entre la seringue et l'extrémité de l'aiguille est important et peut varier de manière sensible, notamment par déformation du tube lorsque celui-ci est souple.

Un autre dispositif, similaire, est décrit dans le brevet US 5,927,547. Il comporte:
- un dispensateur formé d'un micro-doseur piézo-électrique,
- une seringue munie d'un piston et formant logement, commandée par un moteur pas à pas,
- un capteur de pression, et
- des premier et second tubes reliant respectivement la seringue au capteur et le capteur au micro-doseur.

Dans ce dispositif, la seringue, le capteur et le premier tube, ainsi qu'une partie du second tube, contiennent un liquide transporteur. Un fluide à dispenser, en l'occurrence un liquide également, disposé dans une source, est aspiré par le piston dans le micro-doseur et jusque dans le second tube, avec interposition d'une bulle d'air entre le liquide transporteur et le fluide.

Le fluide à dispenser est éjecté du micro-doseur en appliquant un signal au piézo-électrique, ce qui engendre une onde de choc provoquant l'émission d'une gouttelette de volume connu, fonction des dimensions du micro-doseur et des caractéristiques du fluide considéré.

Des moyens de commande vérifient, par l'intermédiaire du capteur, que la pression du liquide de transport reste constante, ce qui assure le bon fonctionnement du micro-doseur. Cette pression est ajustée par l'envoi d'impulsions au moteur pas à pas, qui commande le piston de la seringue. Afin de ne dispenser de fluide que dans des cibles chargées, le micro-doseur comporte, à son extrémité libre, un senseur capacitif de niveau.

Le micro-doseur piézo-électrique permet de délivrer des volumes très faibles, pouvant être de l'ordre de 5 picolitres. Le débit maximum atteignable est malheureusement limité, de sorte que le temps nécessaire à dispenser des quantités de fluide de l'ordre du µl rend un tel dispositif peu performant. De plus, le volume disponible dans le micro-doseur est relativement modeste, de sorte que, si l'on veut éviter de trop nombreux mouvements entre la source et la cible, le fluide à dispenser doit être chargé non seulement dans le micro-doseur, mais encore dans le tube qui le relie au capteur. Il y a donc aussi un certain risque de pollution.

Le document WO 98/45205 propose une version améliorée du dispositif selon le brevet US 5,927,547. Dans ce cas, le liquide transporteur est déplacé en mettant son réservoir en sous-pression, de manière à aspirer, dans le micro-doseur piézo-électrique, sous le contrôle d'un capteur de débit, une quantité déterminée de fluide.

La présente invention a pour but de proposer un dispositif dispensateur n'utilisant pas de micro-doseur piézo ou élément équivalent. Ce but est atteint grâce au fait qu'il comporte:
- un organe de dispense comprenant :
   - un conduit pour le passage d'un liquide transporteur,
   - une vanne fixée à l'une des extrémités dudit conduit,
   - une aiguille dispensatrice passive disposée à l'autre extrémité, et
   - des moyens de mesure du débit du liquide transporteur dans le conduit, intercalés entre la vanne et l'aiguille,
- un récipient étanche partiellement rempli du liquide transporteur et dans lequel plonge un tube relié à la vanne,
- une pompe, de type aspirante et refoulante, en communication avec le récipient et servant à mettre celui-ci en sur-pression ou sous-pression afin de faire circuler le liquide transporteur au travers dudit conduit dans un sens ou dans l'autre,
- des moyens de calcul de la quantité de fluide aspiré ou refoulé au travers de l'aiguille à partir des informations fournies par lesdits moyens de mesure du débit, et
- un circuit de commande placé sous les ordres desdits moyens de calcul et assurant principalement les fonctions de commande de la pompe pour mettre ledit récipient en sur-pression ou en sous-pression et de commande de l'ouverture et de la fermeture de la vanne pour permettre ou non le déplacement d'une quantité déterminée de liquide transporteur dans un sens ou dans l'autre, la circulation de ce liquide assurant à elle seule, sans l'aide d'aucun autre moyen, l'aspiration dans l'aiguille, puis sa restitution en une seule fois, d'une quantité déterminée de fluide.

De façon avantageuse, le conduit est formé à l'intérieur d'un corps allongé portant, à ses extrémités respectives, la vanne et l'aiguille et, dans sa portion médiane, les moyens de mesure du débit qui sont interposés sur le trajet du conduit, en communication avec lui. La mesure du volume dispensé est ainsi optimale.

Pour certaines applications, dans lesquelles de très faibles volumes sont mis en oeuvre, la pratique a montré qu'il est avantageux que le conduit soit formé à l'intérieur d'un corps allongé portant, à ses extrémités respectives, la vanne et l'aiguille et que les moyens de mesure du débit soient interposés sur le trajet du conduit, en amont de la vanne.

Selon un mode de réalisation préféré, les moyens de mesure du débit sont du type fournissant une mesure de la différence de pression entre deux points du conduit et une mesure de la température.

Dans ce mode de réalisation, les moyens électroniques peuvent être agencés pour analyser les informations provenant des moyens de mesure du débit et pour informer des conditions de dispense du fluide.

De préférence, les moyens de calcul ont en mémoire les valeurs de la viscosité du liquide de transport en fonction de la température et sont programmés pour calculer avec précision, à partir des informations de pression et de température livrées par lesdits moyens de mesure du débit, la quantité de fluide aspiré ou refoulé au travers de l'aiguille.

Enfin, il est particulièrement avantageux que les moyens électroniques soient agencés, en plus, pour détecter qu'une goutte de fluide attachée à l'extrémité de l'aiguille est au contact d'une cible.

Il est intéressant de relever que le dispositif tel que défini ci-dessus permet de mesurer de manière précise le volume de fluide tant lorsqu'il est aspiré que lorsqu'il est dispensé. Il est ainsi possible de préparer des doses d'un ou de plusieurs fluides, séparées par une bulle d'air, ces doses étant ensuite dispensées dans les cibles.

D'autres avantages et caractéristiques de l'invention ressortiront de la description qui va suivre, faite en regard du dessin annexé, dans lequel:
- la figure 1 est le schéma de principe d'un dispositif dispensateur de fluide dans son environnement, et
- la figure 2 montre, de manière plus détaillée, la structure du dispositif selon l'invention.

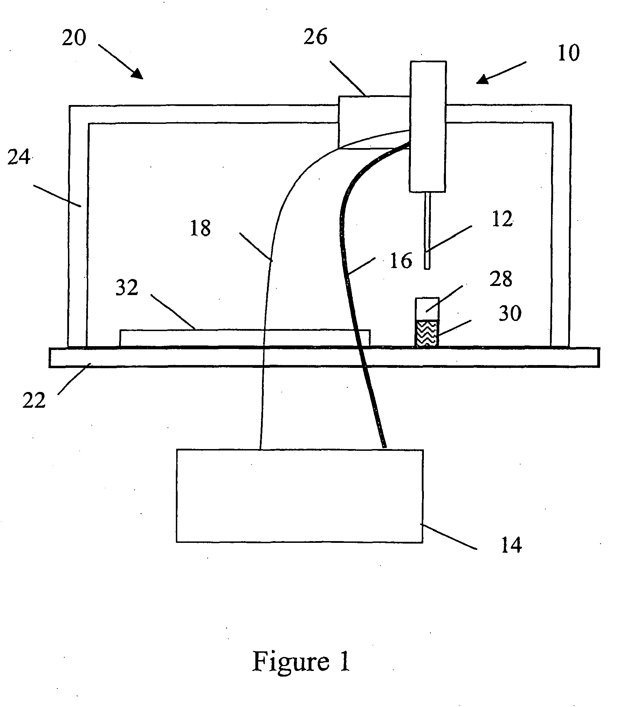

La figure 1 montre, de manière schématique, un ensemble comprenant un dispensateur de fluide 10 équipé d'une aiguille de dispense 12 et une armoire de commande 14. Un tube 16 et un câble 18 relient le dispensateur 10 à l'armoire 14.

L'ensemble comprend, en outre, un robot 20 de type cartésien, formé d'une table horizontale 22, d'un portique 24 monté mobile en translation sur la table selon une direction perpendiculaire au plan de la figure et d'un chariot 26 monté mobile en translation horizontale sur le portique selon une direction parallèle au plan de la figure. Le dispensateur 10 est monté mobile en translation verticale sur le chariot 26, de telle sorte qu'il peut se déplacer ainsi selon trois axes orthogonaux. Une source 28 contenant un fluide 30, et une cible 32 sont disposées sur la table 22, dans l'espace balayé par le portique 24.

L'ensemble représenté à la figure 1 est destiné à permettre un transfert précis du fluide 30, au moyen du dispensateur 10, de la source 28 vers la cible 32.

Tant la source 28 que la cible 32 peuvent être une éprouvette, une plaque de micro-titration (de type 96, 384 ou 1536 par exemple) ou toute autre surface ou réservoir de liquide disposé sur n'importe quel format spatial. Le fluide 30 est généralement un liquide, mais il pourrait également s'agir d'un gaz. Dans ce cas, la source 28 est un récipient étanche fermé par une membrane susceptible d'être perforée et l'aiguille 12 est de type similaire à celles utilisées pour les injections hypodermiques, par exemple.

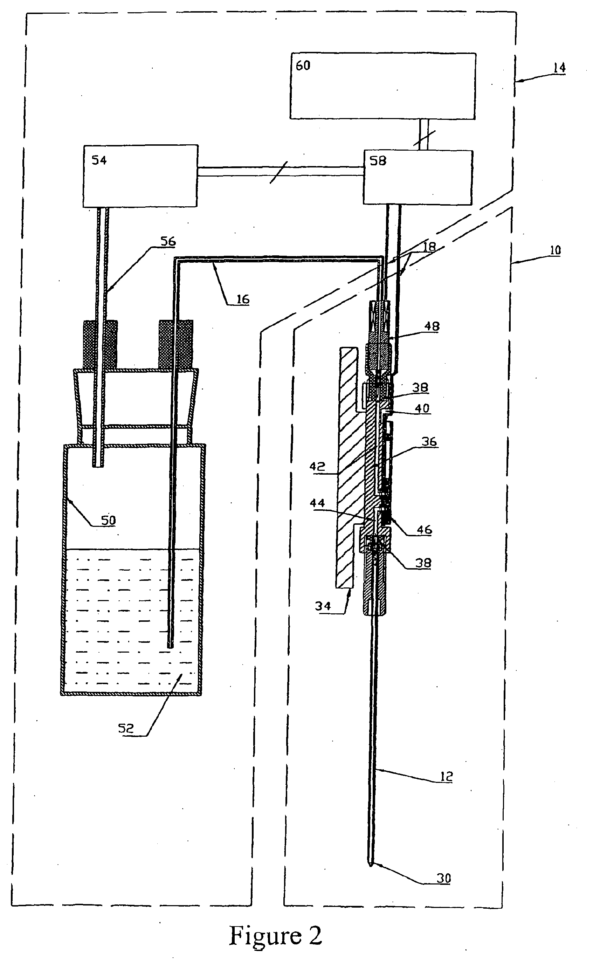

On se référera maintenant à la figure 2 qui montre, de manière plus détaillée, le dispensateur 10 et l'armoire de commande 14.

Le dispensateur 10 comprend un support 34 destiné à être fixé sur le chariot 26 et portant un corps allongé 36, avantageusement réalisé en plastique chimiquement inerte, tel que le matériau connu sous le nom de PEEK, de forme généralement cylindrique et monté verticalement. Il comporte, à chaque extrémité, un logement cylindrique 38 et, dans sa portion médiane, une cavité 40. Par ailleurs, il est percé, selon son axe, d'un conduit supérieur 42 débouchant, d'une part, dans le logement supérieur 38 et, d'autre part, dans la cavité 40 et d'un conduit inférieur 44 débouchant, d'une part, dans le logement inférieur 38 et, d'autre part, dans la cavité 40.

La cavité 40 reçoit un débitmètre 46, réalisé sur une plaquette en céramique et qui est positionné de manière à se trouver en communication étanche avec les extrémités des conduits 42 et 44. Il est avantageusement fixé par serrage, avec interposition de joints d'étanchéité.

Le logement supérieur 38 reçoit, de manière étanche et amovible, par l'intermédiaire d'un adaptateur approprié, une vanne 48 ayant pour fonction d'assurer la mise en communication du conduit supérieur 42 avec le tube 16.

A l'autre extrémité du corps 36, le logement inférieur 38 reçoit, également de manière étanche et amovible, par l'intermédiaire d'un adaptateur approprié, l'extrémité de l'aiguille de dispense 12.

L'aiguille 12 est choisie en fonction de la manière dont le fluide 30 doit être dispensé sur la cible 32 et du volume à dispenser, comme cela sera précisé plus loin.

Le matériau constituant l'aiguille 12 ne doit pas réagir avec le fluide. L'acier inoxydable peut, par exemple, être utilisé dans de nombreux cas. Le matériau de base peut ou non être recouvert d'une couche améliorant les propriétés de mouillabilité ou de non-mouillabilité de certaines surfaces internes ou externes de l'aiguille.

La longueur et le diamètre du trou de l'aiguille 12 sont choisis en fonction de la quantité de fluide à dispenser en une ou plusieurs fois sur la cible 32. Ces dimensions sont définies de manière à ce que le volume du trou de l'aiguille soit plus grand que le volume de fluide à dispenser en une fois. Il est ainsi possible d'aspirer le volume considéré de manière qu'il soit entièrement logé dans l'aiguille, ce qui présente différents avantages.

En effet, dès lors que le fluide 30 reste confiné dans l'aiguille 12, il suffit de changer cette dernière lorsqu'on veut dispenser un autre fluide, plutôt que de devoir nettoyer tout le dispensateur. Il est ainsi possible de dispenser, au cours d'une même séquence, plusieurs fluides, en des quantités très variables, sans que cela ne pose problème. Il suffit, à cet effet, de changer d'aiguille, ce qu'un robot peut faire sans difficulté.

Il est aussi possible de dispenser des fluides très corrosifs, moyennant simplement le choix de l'aiguille adéquate.

En d'autres termes, ces avantages proviennent du fait qu'il n'y a pas d'interférence entre le ou les fluides à dispenser et les composants du dispensateur 10 autres que l'aiguille 12.

Le débitmètre 46 joue un rôle important dans le bon fonctionnement du dispositif car il doit permettre de mesurer, avec précision, un volume de quelques nanolitres. Il est avantageux d'utiliser, à cet effet, le débitmètre décrit dans la publication intitulée "A Differential Pressure Liquid Flow Sensor for Flow Regulation and Dosing Systems", M. A. Boillat et al. 0-7803-2503-6 © 1995 IEEE. Ce débitmètre comporte des capteurs permettant de mesurer une différence de pression entre son entrée et sa sortie, ainsi que la température du fluide qui le traverse. Ces deux paramètres étant déterminés, il est possible de calculer le débit, à condition que la viscosité du liquide de transport en fonction de sa température soit connue.

Comme le montre la figure 2, l'armoire de commande 14 comprend un récipient étanche 50 partiellement rempli d'un liquide transporteur 52 dans lequel plonge le tube 16 relié à la vanne 48. Une pompe 54, de type aspirante et refoulante, est en communication, par un conduit 56, avec la partie supérieure du récipient située au-dessus du liquide 52.

Le liquide 52 est choisi en fonction du fluide 30 à dispenser, de manière à ce qu'ils soient, du point de vue chimique, neutres l'un à l'égard de l'autre. On notera que le liquide 52 remplit le tube 16 et traverse le dispensateur 10 jusqu'à l'aiguille 12, comme cela sera précisé plus loin.

La pompe 54 permet de mettre le récipient 50 en sur-pression ou en sous-pression. De la sorte, lorsque la vanne 48 est ouverte, le liquide 52 peut se déplacer du récipient 50 vers l'aiguille 12 ou dans l'autre sens.

Un circuit de commande 58 est relié à la pompe 54, à la vanne 48 et au débitmètre 46. Il est sous les ordres d'un ordinateur 60 afin d'assurer les principales fonctions suivantes :
- commande de la pompe 54 en vue de mettre le récipient 50 en sur-pression ou en sous-pression,
- commande de l'ouverture et de la fermeture de la vanne 48, permettant ou non le déplacement du liquide 52 dans un sens ou dans l'autre,
- transmission à l'ordinateur 60 des mesures de pression et de température provenant du débitmètre 46.

L'ordinateur 60 sert à la programmation et à la coordination de l'ensemble. Il contrôle ainsi les déplacements du robot 20 de manière à ce que le dispensateur 10 aille chercher des doses de fluide 30 dans la source 28 puis les dépose sur la cible 32. De plus, il contient dans sa mémoire les valeurs de la viscosité du liquide de transport en fonction de la température. Cela lui permet, à partir des informations de pression et de température livrées par le débitmètre 46, de déterminer, avec précision et en temps réel, la quantité de fluide aspiré ou refoulé au travers de l'aiguille 12. Il est ainsi possible de garder en mémoire les quantités exactes de fluide 30 dispensées à chaque fois. En outre, l'analyse des signaux émis par le débitmètre 46 permet de détecter des disfonctionnements dans le dispositif, tels que problème d'étanchéité ou obturation des conduits 42 ou 44.

Le dispositif qui vient d'être décrit permet de transférer un fluide 30 entre la source 28 et la cible 32 de manière particulièrement efficace et économique. Cette opération s'effectue de la manière suivante.

Dans un premier temps, le liquide transporteur 52 est introduit dans le récipient 50. Puis celui-ci est fermé et la pompe 54 est activée, de manière à mettre le récipient 46 en sur-pression. La vanne 48 est alors ouverte, de sorte que le liquide 52 pénètre dans le tube 16 et traverse le dispensateur 10 jusqu'à l'aiguille 12 qu'il remplit complètement. La vanne 48 est alors fermée.

Lors, de cette opération, il est indispensable de s'assurer qu'il ne reste pas de bulle d'air dans le tube 16, ce qui dégraderait les performances du dispositif. Cette vérification peut se faire de manière automatique, par l'analyse des signaux émis par le débitmètre. On constate en effet que la présence de bulles d'air amène une élasticité dans les conduits 42 et 44, ce qui ralentit la montée en pression lorsque la vanne est ouverte.

Le dispositif 10 est maintenant prêt à prélever le fluide 30 dans la source 28 pour le dispenser sur la cible 32. A cet effet, le récipient 50 est mis en sous-pression par la pompe 54 et le robot 20 amène l'aiguille 12 au-dessus de la source 28.

Selon un mode de fonctionnement avantageux, une faible quantité d'air est, tout d'abord, aspirée par l'aiguille 12 de manière à former une bulle entre le liquide 52 et le fluide 30 à dispenser. A cet effet, la vanne 48 est ouverte et le liquide 52 remonte dans l'aiguille 12 en direction du récipient 50, au travers du débitmètre 46 dont le signal de sortie permet au circuit de commande 58 de calculer le volume d'air aspiré, c'est à dire le volume de la bulle. Lorsque le volume mesuré atteint la valeur désirée, contenue dans l'ordinateur 60, la vanne 48 est fermée et le robot 20 introduit l'aiguille 12 dans le fluide 30.

Lorsque ce dernier est un liquide, ce qui est généralement le cas, le débitmètre 46 enregistre une brusque variation de pression quand l'aiguille 12 y pénètre. L'ordinateur 60 peut ainsi connaître la position de l'aiguille 12 par rapport à la surface du fluide 30. Il donne alors au robot 20 l'ordre de plonger l'aiguille 12 dans le fluide 30 suffisamment pour éviter que des bulles parasites ne se forment lors de l'aspiration. La vanne est ensuite ré-ouverte de manière à commencer l'aspiration.

Lorsque, sur la base des indications fournies par le débitmètre 46, l'ordinateur 60 détermine que la quantité souhaitée de fluide a été aspirée dans l'aiguille 12, la vanne 48 est refermée.

Il est possible de répéter cette opération plusieurs fois, de sorte que l'aiguille 12 peut contenir plusieurs doses du fluide 30, séparées chacune par une bulle d'air.

En variante, le fluide 30 peut être aspiré sans interposition d'une bulle d'air. L'aiguille 12 est alors directement plongée dans le fluide 26 et la détermination du volume aspiré se fait comme décrit ci-dessus, mais en une seule fois.

Lorsque l'aiguille 12 est chargée du fluide à dispenser, le robot 20 amène le dispensateur 10 au-dessus de la cible 32 et la pompe 54 met le récipient 50 en sur-pression. La vanne 48 est alors ouverte pour laisser éjecter le fluide et refermée lorsque le volume mesuré correspond au volume fixé par l'ordinateur.

Les dimensions du trou de l'aiguilles jouent un rôle important, spécialement lorsque l'extrémité de celle-ci se trouve dans l'air. Dans ce cas, une dispense précise ne peut se faire que dans la mesure où le fluide 30 s'écoule de manière régulière. Cela revient à dire qu'il faut éviter que des gouttes se forment lors de l'opération de dispense. Un choix adéquat de la pression dans le récipient 50 et du diamètre de l'extrémité libre de l'aiguille 12 permet d'assurer un fonctionnement satisfaisant.

Lorsqu'un faible volume doit être dispensé, il est avantageux d'utiliser une aiguille comportant un rétrécissement du trou à son extrémité libre, bien connue sous le nom anglais de "nozzle". Il est, en outre, alors avantageux que le débitmètre 46 se trouve en amont de la vanne 48. L'expérience a en effet montré qu'ainsi l'écoulement pouvait être bien maîtrisé, même avec de faibles débits.

Il va de soi que le dispositif selon l'invention peut être utilisé dans d'autres conditions encore. Il est ainsi aussi possible de dispenser un gaz. Dans ce cas, l'aiguille est introduite dans un flacon étanche, tenant lieu de source 24, qui contient le gaz et du liquide. Un volume de gaz est aspiré, comme expliqué plus haut à propos de l'air, puis une goutte de liquide, de sorte que le gaz est emprisonné dans l'aiguille, par bulles successives de volume ajusté. Ce gaz est, ensuite, dispensé dans une cible, par injection dans celle-ci d'un volume correspondant à celui du gaz et de la goutte séparant deux bulles successives.

## Revendications

1. Dispositif dispensateur de fluide, comportant:
- un organe de dispense (10) comprenant :
- un conduit (42, 44) pour le passage d'un liquide transporteur (52),
- une vanne (48) fixée à l'une des extrémités (38) dudit conduit,
- une aiguille dispensatrice (12) disposée à l'autre extrémité (38), et
- des moyens de mesure du débit (46) du liquide transporteur (52) dans le conduit, intercalés entre la vanne (48) et l'aiguille (12),
- un récipient étanche (50) contenant le liquide transporteur (52) et relié à la vanne (48) par un tube (16),
- une pompe (54), de type aspirante et refoulante, en communication avec le récipient (50) et servant à mettre celui-ci en sur-pression ou sous-pression afin de faire circuler le liquide transporteur (52) au travers dudit conduit (42, 44) dans un sens ou dans l'autre,
- des moyens de calcul (60) de la quantité de fluide aspiré ou refoulé au travers de l'aiguille (12) à partir des informations fournies par lesdits moyens de mesure du débit (46), et
- un circuit de commande (58) placé sous les ordres desdits moyens de calcul (60) et assurant principalement les fonctions de commande de la pompe (54) pour mettre ledit récipient (50) en sur-pression ou en sous-pression et de commande de l'ouverture et de la fermeture de la vanne (48) pour permettre ou non le déplacement d'une quantité déterminée de liquide transporteur (52) dans un sens ou dans l'autre, la circulation de ce liquide assurant à elle seule, sans l'aide d'aucun autre moyen, l'aspiration dans l'aiguille (12), puis sa restitution en une seule fois, d'une quantité déterminée de fluide (30).

2. Dispositif dispensateur de fluide selon la revendication 1, **caractérisé en ce que** ledit conduit (42, 44) est formé à l'intérieur d'un corps allongé (36) portant, à ses extrémités (38) respectives, ladite vanne (48) et ladite aiguille (12) et, dans sa portion médiane (40), lesdits moyens de mesure du débit (46) qui sont interposés sur le trajet du conduit (42, 44), en communication avec lui.

3. Dispositif dispensateur de fluide selon la revendication 1, **caractérisé en ce que** ledit conduit (42, 44) est formé à l'intérieur d'un corps allongé (36) portant, à ses extrémités (38) respectives, ladite vanne (48) et ladite aiguille (12) et **en ce que** lesdits moyens de mesure du débit sont interposés sur le trajet du conduit (42) en amont de ladite vanne (48), en communication avec lui.

4. Dispositif dispensateur de fluide selon la revendication 1, **caractérisé en ce que** lesdits moyens de mesure du débit (46) sont du type fournissant une mesure de la différence de pression entre deux points du conduit et une mesure de la température.

5. Dispositif dispensateur de fluide selon la revendication 4, **caractérisé en ce que** lesdits moyens électroniques (58, 60) sont agencés pour analyser les informations provenant des moyens de mesure du débit (46) et pour informer des conditions de dispense dudit fluide.

6. Dispositif dispensateur de fluide selon la revendication 4, **caractérisé en ce que** lesdits moyens de calcul (60) ont en mémoire les valeurs de la viscosité du liquide de transport (52) en fonction de la température et sont programmés pour calculer, à partir des informations de pression et de température livrées par lesdits moyens de mesure du débit (46), la quantité de fluide aspiré ou refoulé au travers de l'aiguille (12).

## Claims

1. Fluid dispensing device comprising :
- a dispensing member (10) comprising :
- a duct (42, 44) for the passage of a transporter liquid (52),
- a valve (48) fixed to one of the ends (38) of said duct,
- a dispensing needle (12) arranged at the other end (38), end
- measurement means (46) of the rate of flow of the transporter liquid (52) in the duct, arranged between the valve (48) and the needle (12),
- a watertight container (50) containing the transporter liquid (52) and connected to the valve (48) by a tube (16),
- a pump (54) of the intake and delivery type, in communication with the container (50) and being used for placing the latter at a raised pressure or at a reduced pressure so as to cause the transporter liquid (52) to flow through said duct (42, 44) in one direction or the other,
- means (60) for calculating the amount of liquid drawn into or delivered through the needle (12), on the basis of the information provided by said flow measurement means (46), and
- a control circuit (58) placed under the command of said calculating means (60) and mainly performing the function of controlling the pump (54) to place said container (50) at a raised or reduced pressure and the function of commanding the opening and the closing of the valve (48) to allow or not the displacement of a determined amount of transporter liquid (52) in one direction or the other, the flow of this liquid performing by itself, without the assistance of any further mean, the drawing up in the needle (12), and its return all at once, of a determined amount of fluid (30).

2. Fluid dispensing device according to claim 1, **characterized in that** said duct (42, 44) is formed inside an elongate body (36) which bearing, at its respective ends (38), said valve (48) and said needle (12) and, in its middle portion (40), said flow measurement means (46) which are inserted in the path of the duct (42, 44), in communication with it.

3. Fluid dispensing device according to claim 1, **characterized in that** said duct (42, 44) is formed inside an elongate body (36) which bearing, at its respective ends (38), said valve (48) and said needle (12) and **in that** said flow measurement means are inserted in the path of the duct (42) upstream of said valve (48), en communication with it.

4. Fluid dispensing device according to claim 1, **characterized in that** said flow measurement means (46) are of the type providing a measure of the pressure difference between two points of the duct and a temperature measure.

5. Fluid dispensing device according to claim 4, **characterized in that** said electronic means (58, 60) are arranged to analyze information provided by the flow measurement means (46) and to provide information on the dispensing conditions of said fluid.

6. Fluid dispensing device according to claim 4, **characterized in that** said calculating means (60) hold, in memory, the values of the viscosity of the transport liquid (52) as a function of the temperature and are programmed to calculate, on the basis of the information of pressure and temperature provided by said flow measurement means (46), the fluid amount drawn into or deliver through the needle (12).

## Patentansprüche

1. Fluidspendevorrichtung, die umfasst:
- ein Spenderorgan (10), das umfasst:
- eine Leitung (42, 44) für den Durchgang einer Transportflüssigkeit (52),
- ein Ventil (48), das an einem der Enden (38) der Leitung befestigt ist,
- eine Spendernadel (12), die am anderen Ende (38) angeordnet ist, und
- Mittel zum Messen des Durchfluss-Stroms (46) der Transportflüssigkeit (52) in der Leitung, die zwischen dem Ventil (48) und der Nadel (12) zwischengeschaltet sind,
- einen dichten Behälter (50), der die Transportflüssigkeit (52) enthält und mit dem Ventil (48) durch ein Rohr (16) verbunden ist,
- eine Pumpe (54) vom Ansaug- und Fördertyp in Kommunikation mit dem Behälter (50), die dazu dient, diesen in Überdruck oder Unterdruck zu versetzen, damit die Transportflüssigkeit (52) durch die Leitung (42, 44) in die eine oder die andere Richtung fließt,
- Mittel zur Berechnung (60) der durch die Nadel (12) angesaugten oder geförderten Fluidmenge auf der Grundlage von Informationen, die von den Durchflussstrommessmitteln (46) zur Verfügung gestellt werden, und
- einen Steuerkreis (58), der unter dem Befehl der Berechnungsmittel (60) steht und im wesentlichen die Steuerfunktionen der Pumpe (54) gewährleistet, um den Behälter (50) in Überdruck oder in Unterdruck zu versetzen und des Öffnens und Schließens des Ventils (48), um die Verdrängung einer bestimmten Menge Transportflüssigkeit (52) in die eine oder die andere Richtung zu erlauben oder nicht, wobei die Zirkulation dieser Flüssigkeit allein ohne Hilfe anderer Mittel das Ansaugen in die Nadel (12) und danach die Abgabe in einem Mal einer bestimmten Fluidmenge (30) gewährleistet.

2. Fluidspendevorrichtung nach Anspruch 1, **dadurch gekennzeichnet, dass** die Leitung (42, 44) in einem länglichen Körper (36) ausgebildet ist, der an seinen jeweiligen Enden (38) das Ventil (48) und die Nadel (12) trägt und in seinem mittleren Abschnitt (40) die Mittel zum Messen des Durchfluss-Stroms (46), die auf der Strecke der Leitung (42, 44) in Kommunikation mit ihr zwischengestellt sind.

3. Fluidspendevorrichtung nach Anspruch 1, **dadurch gekennzeichnet, dass** die Leitung (42, 44) in einem länglichen Körper (36) ausgebildet ist, der an seinen jeweiligen Enden (38) das Ventil (48) und die Nadel (12) trägt und **dadurch**, dass die Mittel zum Messen des Durchfluss-Stroms (46) auf der Strecke der Leitung (42, 48) vor dem Ventil (48) in Kommunikation mit ihr zwischengestellt sind.

4. Fluidspendevorrichtung nach Anspruch 1, **dadurch gekennzeichnet, dass** die Mittel zum Messen des Durchfluss-Stroms (46) von dem Typ sind, die einen Messwert der Druckdifferenz zwischen zwei Punkten der Leitung und einen Temperaturmesswert liefern.

5. Fluidspendevorrichtung nach Anspruch 4, **dadurch gekennzeichnet, dass** die elektronischen Mittel (58, 60) ausgebildet sind, um die Informationen zu analysieren, die von den Mitteln zum Messen des Durchfluss-Stroms (46) geliefert werden und um über die Spendebedingungen des Fluids zu informieren.

6. Fluidspendevorrichtung nach Anspruch 4, **dadurch gekennzeichnet, dass** die Berechnungsmittel (60) die Werte der Viskosität der Transportflüssigkeit (52) in Abhängigkeit von der Temperatur im Speicher haben und programmiert sind, um auf der Grundlage der Druck- und Temperaturinformationen, die von den Mitteln zum Messen des Durchfluss-Stroms (46) geliefert werden, die Menge des angesaugten oder durch die Nadel (12) geförderten Fluids zu berechnen.
